# EUROPÄISCHE PATENTSCHRIFT

(11) **EP 4 098 432 B1**
(45) Veröffentlichungstag und Bekanntmachung des Hinweises auf die Patenterteilung: **09.04.2025**
(21) Anmeldenummer: 22185400.3
(22) Anmeldetag: 24.01.2017
(51) Int. Cl.: B30B 7/04, B21D 39/04, B30B 15/04

(54) **RADIALPRESSE**
RADIAL PRESS
PRESSE RADIALE

(30) Priorität: 10.02.2016 DE 102016102275
(43) Veröffentlichungstag der Anmeldung: 07.12.2022
(62) Teilanmeldung aus: 17702324.9
(73) Patentinhaber: Uniflex-Hydraulik GmbH, 61184 Karben (DE)
(72) Erfinder: BAUMGARTNER, Carsten, 35321 Laubach (DE); HEJPLIK, Vaclav, 63128 Dietzenbach (DE); ZIENTEK, Lukas, 61200 Wölfersheim (DE)
(74) Vertreter: Grättinger Möhring von Poschinger Patentanwälte Partnerschaft mbB

(56) Entgegenhaltungen:
- DE-A1- 4 135 465
- US-A- 3 717 024
- US-A1- 2006 090 529

## Beschreibung

Die vorliegende Erfindung betrifft eine Radialpresse mit einer Grundstruktur, einer Mehrzahl von um eine Pressachse herum angeordneten Pressbacken und einer auf diese wirkenden, sich an der Grundstruktur abstützenden Antriebseinheit, mittels derer die Pressbacken radial auf die Pressachse zu bzw. von dieser weg bewegbar sind. Derartige Radialpressen sind in verschiedenen Bauweisen und Ausführungen bekannt, beispielsweise als sog. "Jochpressen" (vgl. zum Beispiel DE 41 35 465 A1, welche als nächstliegender Stand der Technik eine Radialpresse nach dem Oberbegriff des Anspruchs 1 offenbart, DE 199 12 976 A1 und DE 198 17 882 B4), "Hohlkolbenpressen" (vgl. z.B. DE 101 49 924 A1) oder in sonstiger Bauweise (vgl. z.B. DE 28 44 475 A1, DE 36 11 253 A1, DE 100 47 025 C2 und DE 33 31 721 A1).

Insbesondere betrifft die vorliegende Erfindung, wie im Oberbegriff des Anspruchs 1 angegeben, eine nach Art einer Jochpresse ausgeführte Radialpresse mit einer offenen, mindestens zwei Rahmenelemente aufweisenden Grundstruktur, einer Mehrzahl von um eine Pressachse herum angeordneten Pressbacken und einer auf diese wirkenden, sich an der Grundstruktur abstützenden Antriebseinheit, mittels derer die Pressbacken radial auf die Pressachse zu bzw. von dieser weg bewegbar sind, wobei die Radialpresse zwei in einer zur Pressachse senkrecht stehenden Bewegungsrichtung linear relativ zueinander bewegbare Joche oder Steuerkörper umfasst und die Antriebseinrichtung mindestens ein als Linearantrieb ausgeführtes, eine Arbeitsachse definierendes Antriebselement aufweist, das sich an einem der Rahmenelemente abstützt, und die Pressbacken in einem zwischen den beiden Jochen bzw. Steuerkörpern ausgebildeten Werkzeugeinbauraum aufgenommen sind.

Der Einsatzbereich eingangs angegebener Radialpressen hat sich stetig weiter ausgeweitet. Ausgehend von der klassischen Anwendung, nämlich dem unlösbaren, dauerhaft festen und dichten Anbringen von Anschlussarmaturen (durch sog. Crimpen) an den Enden eines Schlauchabschnitts bei der Herstellung von einbaufertigen Hydraulikleitungen, sind mittlerweile eine Vielzahl anderer Anwendungen üblich geworden bis hin zu dem Verbinden von großkalibrigen Rohren im Pipelinebau.

Die vorliegende Erfindung hat sich zur Aufgabe gemacht, Radialpressen der gattungsgemäßen Art im Hinblick auf das ausgedehnte Anwendungsspektrum zu optimieren bzw. zur Anwendung auf neuen Gebieten zu ertüchtigen.

Gelöst wird die vorstehende Aufgabenstellung, indem bei einer Radialpresse der gattungsgemäßen Art radial außerhalb der Pressbacken mindestens eine diese umgebende, sich in einer im Wesentlichen auf der Pressachse senkrecht stehenden Ebene in ringförmig geschlossener Form um die Pressachse herum erstreckende, einen Teil der Grundstruktur bildende Faserstruktur vorgesehen ist, welche die mindestens zwei Rahmenelemente - mindestens eine zwischen diesen bestehende Trennfuge überbrückend - miteinander verbindet. Eines der für die Erfindung charakteristischen und bestimmenden Merkmale besteht demgemäß darin, dass radial außerhalb der Pressbacken eine diese umgebende, sich in einer im Wesentlichen auf der Pressachse senkrecht stehenden Ebene in ringförmig geschlossener Form um die Pressachse herum erstreckende Faserstruktur vorgesehen ist. Die vorliegende Erfindung nutzt dabei die Erkenntnis, dass die in Radialpressen der hier in Rede stehenden Art außerhalb der Pressbacken auftretenden Kräfte, Momente und Lasten sich zu einem ganz erheblichen Teil, bei geeigneter Bauweise sogar vollständig oder zumindest nahezu vollständig, in Zugspannungen, welche in einer die Pressbacken umgebenden Struktur wirken, umsetzen bzw. sich durch solche aufnehmen bzw. kompensieren lassen. Derartige Zugspannungen lassen sich wiederum in einer - im Hinblick auf das Gewicht, das Volumen, die Festigkeit, das Dehnverhalten, den Temperaturgang, etc. der lastaufnehmenden Struktur - besonders effizienten Weise durch die erfindungsgemäß vorgesehene ringförmig geschlossene, sich um die Pressachse herum erstreckende Faserstruktur abtragen bzw. beherrschen.

Aus der US 2006/0090529 A1 ist eine Schließvorrichtung für eine der Herstellung von Metallteilen in einem geschlossenen Formwerkzeug dienende Maschine bekannt, bei der die beiden Teilwerkzeuge des Formwerkzeugs mittels mehrerer sie umgebender, beispielsweise aus einem Carbonfaser-Material bestehender ringförmiger Zugstrukturen gegeneinander verspannt werden. Die US 3 717 024 A offenbart eine Presse mit einem Rahmen, welcher aus zwei über Bolzen miteinander verbundenen Rahmenelementen besteht, wobei die beiden Rahmenelemente von mindestens einer aus einer Faser/Harz-Matrix bestehenden ringförmig geschlossenen Struktur umgeben sind.

Erfindungsgemäß ist die Faserstruktur der Radialpresse Teil von deren Grundstruktur, welche mindestens zwei - auf einander gegenüberliegenden Seiten eines die Pressbacken aufnehmenden Werkzeugeinbauraumes angeordnete - Rahmenelemente aufweist und in dem Sinne offen ist, dass die Faserstruktur die lasttragende Verbindung zwischen den beiden Rahmenelementen darstellt. Dabei verbindet die Faserstruktur die mindestens zwei Rahmenelemente in einer mindestens eine zwischen diesen bestehende Trennfuge überbrückenden Weise. Dabei ist die weiter unten erläuterte Besonderheit, dass mehrere in Richtung der Pressachse zueinander versetzt angeordnete Faserstrukturen vorgesehen sind, ganz besonders vorteilhaft. Dabei besteht, wenn es sich bei den beiden Rahmenelementen und der mindestens einen Faserstruktur um voneinander getrennte Bauteile handelt, besonders bevorzugt zwischen der mindestens einen Faserstruktur und den mindestens zwei Rahmenelementen ein Schlupf in dem Sinne, dass sich die Faserstruktur belastungsabhängig relativ zu den mindestens zwei Rahmenelementen verschieben kann. Insoweit ist die mindestens eine Faserstruktur besonders bevorzugt in einem zugeordneten Sitz (bzw. einer zugeordneten Führung, **z. B.** in Form einer Führungsnut) angeordnet, welcher einen Schlupf der Faserstruktur in deren Umfangsrichtung zulässt, eine Verlagerung der Faserstruktur quer zur Umfangsrichtung, d. h. insbesondere in Richtung der Pressachse aber unterbindet.

Als Faserstrukturen in diesem Sinne sind dabei solche Strukturen anzusehen, bei denen Langfasern sich in Umfangsrichtung orientiert um die Pressachse herum erstrecken, insbesondere aufgrund der (vollständigen oder zumindest teilweisen) Herstellung in Wickeltechnik. Als Langfasern gelten dabei insbesondere solche Fasern, deren Länge ein Mehrfaches des mittleren Umfangs der ringförmigen Faserstruktur beträgt, so dass sich eine entsprechend große, d. h. mehrfache Umschlingung ergibt. Als besonders vorteilhaft in Betracht kommt dabei insbesondere auch die Herstellung der Faserstruktur in Wickeltechnik unter Verwendung eines Endlosfilaments. Dabei können die einzelnen Faserstrukturen bzw. Faserstrukturbauteile individuell einzeln gefertigt werden, insbesondere auch direkt auf das sie in der bestimmungsgemäßen Anwendung tragende Bauteil, d. h. in situ. In wirtschaftlicher Hinsicht kann allerdings beispielsweise auch eine (insbesondere in besagter Wickeltechnik erfolgende) Herstellung längerer rohrartiger Gebilde attraktiv sein, von denen dann die einzelnen Faserstrukturbauteile entsprechend der benötigten Breite abgelängt werden.

Im Rahmen der Umsetzung der Erfindung ist bedeutsam, dass - beim Pressen des Werkstücks - die Faserstruktur über ihren gesamten Verlauf durchgängig auf Zug beansprucht ist. Insoweit ist weiterhin ein wesentlicher Gesichtspunkt, dass die Faserstruktur in Umfangsrichtung keine allzu kleinen Radien und erst recht keinen Knick bzw. keine Ecke oder Kante hat. Der äußere Radius der Faserstruktur in Umfangsrichtung sollte vielmehr an keiner Stelle geringer sein als der 1,5-fache Wert des Radius' des Presswerkzeugs in dessen maximal geöffneter Stellung. Bevorzugt ist der äußere Radius der Faserstruktur in Umfangsrichtung sogar an keiner Stelle geringer als der 2-fache Wert des Radius' des Presswerkzeugs in dessen maximal geöffneter Stellung. Doch selbst wenn - aufgrund geometrischer Verhältnisse und/oder besonderer Belastungssituationen innerhalb der Faserstruktur örtlich ausgeprägte Spannungsspitzen existieren, so unterbindet der Faserverlauf (s. o.) das Entstehen bzw. die Ausbreitung eines Risses und somit ein Versagen des Bauteils.

Infolge der besonders hohen Festigkeit von Faserstrukturen, wie insbesondere Kohlenstoff-, aber auch anderer nichtmetallischer Faserstrukturen (z. B. Glasfaser), lassen sich leistungsstarke und trotzdem ausgesprochen kompakte Radialpressen bereitstellen. Die Kompaktheit ist dabei ein wichtiger Gesichtspunkt im Hinblick auf ein breites Anwendungsspektrum; denn für die Bearbeitung diverser Werkstückgeometrien, wie beispielsweise bei engen Bögen etc., sind raumgreifende Radialpressen hinderlich.

Gemäß einer ersten bevorzugten Weiterbildung der Erfindung sind mehrere in Richtung der Pressachse zueinander versetzt angeordnete, voneinander unabhängige Faserstrukturen vorgesehen. Auf diese Weise lassen sich die günstigen Eigenschaften des zur Herstellung der ringförmigen Faserstruktur(en) verwendeten Materials zusätzlich für eine Optimierung der Maßhaltigkeit und sonstigen Fertigungsqualität des Werkstücks ausnutzen; denn indem - in Richtung der Pressachse zueinander versetzt angeordnet - mehrere ringförmig geschlossene Faserstrukturen vorgesehen sind, wird die Gefahr maßgeblich reduziert, dass sich bei einer von der idealen Position abweichenden, längs der Pressachse in der einen oder anderen Richtung verschobenen Positionierung des Werkstücks die Radialpresse belastungsinduziert so verformt, dass eine mehr oder weniger ausgeprägt konische Pressung erfolgt.

Erfindungsgemäß weist die Antriebseinrichtung mindestens ein als Linearantrieb ausgeführtes Antriebselement auf, das eine (sich quer zur Pressachse erstreckende) Arbeitsachse definiert, längs derer ein von dem Antriebselement bewegtes weiteres Bauteil der Antriebseinrichtung verschiebbar ist. Mit diesem sind die Pressbacken in dem Sinne mechanisch gekoppelt, dass eine Bewegung jenes Bauteils in eine radiale Bewegung der Pressbacken umgesetzt wird. Die mindestens zwei Rahmenelemente, um die herum sich die mindestens eine Faserstruktur erstreckt und die mittels der mindestens einen ringförmig geschlossenen Faserstruktur miteinander verbunden sind, werden (in Richtung der Arbeitsachse) durch den in der Faserstruktur wirkenden Zug in ihrer Relativposition zueinander gehalten. Mit anderen Worten: Die Position der mindestens zwei Rahmenelemente relativ zueinander (längs der Arbeitsachse) ist in diesem Falle durch die mindestens eine Faserstruktur bestimmt. Diese ist bevorzugt so vorgespannt, dass auch bei nicht betätigter Antriebseinrichtung eine vorgegebene Mindest-Zugspannung eingehalten wird. Quer zur Arbeitsachse sind die mindestens zwei Rahmenelemente demgegenüber bevorzugt über ineinander greifende Führungselemente zueinander positioniert, justiert und/oder geführt.

Die vorstehend erläuterten konstruktiven Aspekte kommen bei den hier genannten, in Jochpressenbauweise ausgeführten Radialpressen bzw. bei Radialpressen in einer an Jochpressen angelehnten Bauweise mit besonderem Vorteil zur Anwendung. Bei diesen sind zwei Joche (bzw. jochartige Steuerkörper) in einer zur Pressachse senkrecht stehenden Bewegungsrichtung linear relativ zueinander bewegbar, wobei die Pressbacken in einem zwischen den beiden Jochen/Steuerkörpern ausgebildeten Werkzeugeinbauraum aufgenommen sind. Eines der beiden Joche (bzw. einer der beiden Steuerkörper) kann dabei ein integrales Bauteil mit einem Rahmenelement der vorstehend erläuterten Art darstellen. Demgegenüber wirkt bevorzugt auf das andere Joch (bzw. den anderen Steuerkörper) ein Antriebselement, das sich an dem anderen, ihm zugeordneten Rahmenelement abstützt.

Von erheblichem Vorteil ist dabei, wenn sich die Joche/Steuerkörper an ihren dem Werkzeugeinbauraum abgewandten Rändern an zwei zueinander beabstandeten definierten Stützzonen an einem jeweils zugeordneten Widerlager abstützen. Dies wirkt einem "Aufbiegen" des jeweiligen Jochs/Steuerkörpers unter Last entgegen, wie es bei einer vollflächigen Abstützung des Jochs/Steuerkörpers mitunter, insbesondere bei zu schwach dimensionierten Jochen/Steuerkörpern, zu beobachten ist und sich nachteilig auf die Maßhaltigkeit des Werkstücks auswirkt. So können, mit anderen Worten, bei Umsetzung dieser Weiterbildung die Joche/Steuerkörper etwas schwächer dimensioniert werden als nach dem Stand der Technik, ohne dass dies nachteilige Auswirkungen auf die Qualität der Pressung und des fertigen Werkstücks hätte. Das Widerlager, an welchem sich das jeweilige Joch (bzw. der jeweilige Steuerkörper) im Bereich jener beiden voneinander beabstandeten Stützzonen abstützt, kann dabei integrierter Teil der Faserstruktur, ein gesondertes Rahmenelement oder ein Teil des Antriebselements sein.

Nur der Vollständigkeit halber ist darauf hinzuweisen, dass im Rahmen der vorliegenden Erfindung eine synchrone und übereinstimmende Bewegung sämtlicher (z. B. acht) Pressbacken zwar im Regelfall vorgesehen sein wird, aber keinesfalls zwingend ist. Vielmehr ist über geeignete Ausführung der Antriebseinheit - beispielsweise die Gestaltung der Steuerflächen der Joche, Druckringe oder sonstigen Steuerkörper - möglich, dass die Pressbacken gruppenweise unterschiedlichen Bewegungsprofilen folgen, beispielsweise indem einige Pressbacken gegenüber den anderen verzögert und/oder verlangsamt und/oder um einen reduzierten Weg bewegt werden. Dies kann bei der Herstellung von Sondergeometrien nützlich sein.

Im Folgenden wird die vorliegende Erfindung anhand eines in der Zeichnung veranschaulichten bevorzugten Ausführungsbeispiels näher erläutert. Dabei zeigt
- Fig. 1: in einer teilweise geschnittenen perspektivischen Ansicht ein erstes Ausführungsbeispiel einer Radialpresse nach der vorliegenden Erfindung bei geöffnetem Werkzeug,
- Fig. 2: in einer teilweise geschnittenen Draufsicht die Radialpresse nach Fig. 1 und
- Fig. 3: einen Horizontalschnitt durch die Radialpresse nach den Fig. 1 und 2 auf Höhe der Pressachse bei geschlossenem Werkzeug.

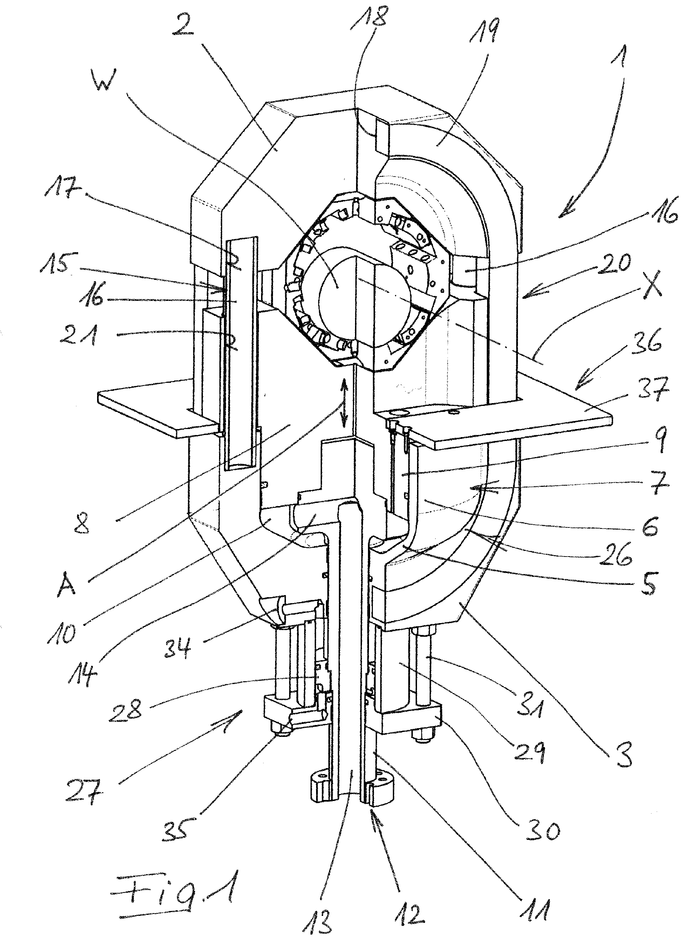

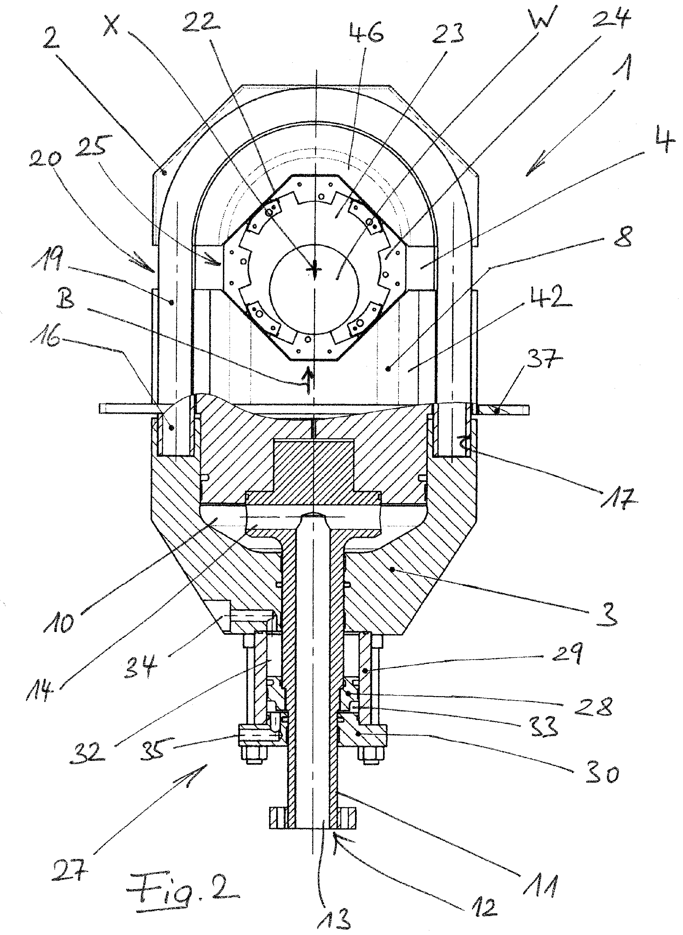

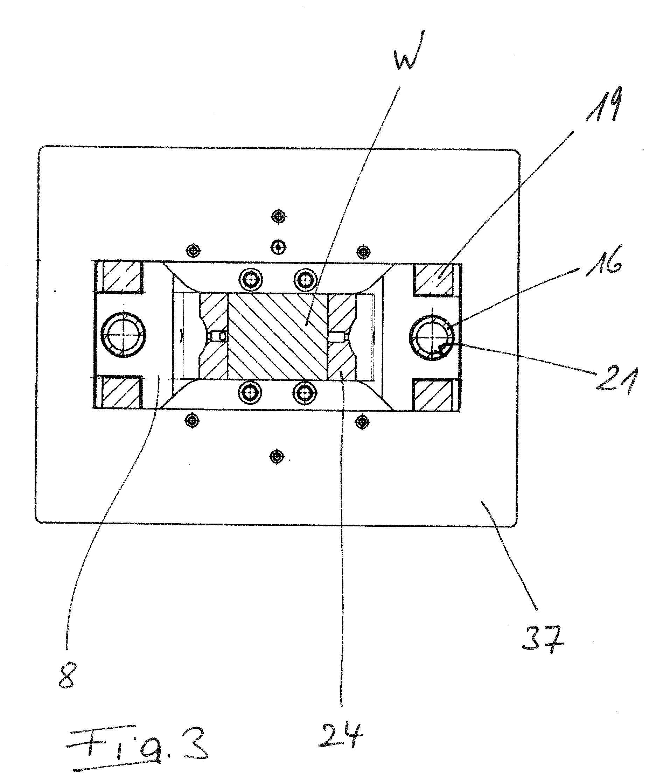

Die in den Figuren 1 bis 3 gezeigte Radialpresse nach einem ersten Ausführungsbeispiel der Erfindung dient der auf eine Pressachse X bezogenen Radialverformung eines Werkstücks W. Sie umfasst eine Grundstruktur 1 mit einem oberen Rahmenelement 2 und einem unteren Rahmenelement 3. Bei den beiden Rahmenelementen 2, 3 handelt es sich um voneinander getrennte Bauteile, zwischen denen eine Trennfuge 4 besteht. In das untere Rahmenelement 3 ist ein nach oben offener, einen schüsselförmigen Zylinderboden 5 und einen Zylindermantel 6 umfassender Zylinder 7 integriert. In diesem ist ein an einem Schieber 8 angeformter Kolben 9 längs der (vertikalen) Arbeitsachse A verschiebbar dichtend geführt. Der Zylinder 7 und der Kolben 9 begrenzen einen hydraulischen Arbeitsraum 10, der über den endseitig an einer hohlen Kolbenstange 11 angeordneten Hydraulikanschluss 12, die die Kolbenstange 11 längs durchsetzende Bohrung 13 und die (in den Arbeitsraum 10 mündende) Querbohrung 14 mit Hydraulikfluid beaufschlagbar ist.

Das obere Rahmenelement 2 und das untere Rahmenelement 3 sind über Führungselemente 15, nämlich über zwei - in der auf der Pressachse X senkrecht stehenden Mittelebene angeordnete - Führungsrohre 16, welche in korrespondierende Bohrungen 17 der beiden Rahmenelemente 2, 3 eingreifen, relativ zueinander justiert und positioniert und dabei auf einen vorgegebenen Abstand zueinander gehalten. Jedes der beiden Rahmenelemente 2, 3 weist an seinen beiden Stirnseiten jeweils eine Nut 18 auf, welche einen 180°-Bogen beschreibt und der Aufnahme eines geschlossenen ovalen Rings 19 aus Carbonfasern dient. Die beiden Carbonfaserringe 19, welche im Sinne der vorliegenden Erfindung jeweils eine im Wesentlichen auf der Pressachse X senkrecht stehenden Ebene in ringförmig geschlossener Form um die Pressachse X herum erstreckende Faserstruktur 20 bilden, überbrücken dabei die zwischen den beiden Rahmenelementen 2, 3 bestehende Trennfuge 4. Sie sind dabei unter Vorspannung in die besagten Nuten 18 eingelegt, so dass die beiden Rahmenelemente 2, 3 auch unter Last (s. u.) ihre durch die beiden Führungsrohre 16 vorgegebene Position zueinander zumindest im Wesentlichen einhalten. Eine bei besonders hohen Presskräften auftretende minimale Dehnung der Carbonfaserringe 19 bleibt ohne nachteilige Folgen, weil zwischen den Carbonfaserringen 19 und den Rahmenelementen 2, 3 Schlupf besteht, so dass sich die Zugspannungen gleichmäßig über die Carbonfaserringe 19 verteilen können.

Zwischen dem - mittels der beiden Führungsbohrungen 21 auf den beiden Führungsrohren 16 geführten - Schieber 8 und dem oberen Rahmenelement 2 ist in einer Weise, wie dies von Jochpressen (vgl. beispielsweise DE 4135465 A1) her bekannt ist, ein durch Stütz- und Führungsflächen 22 begrenzter Werkzeugeinbauraum 23 ausgebildet, in dem das acht Pressbacken 24 umfassende Presswerkzeug 25 aufgenommen ist. Da dies mit der Maßgabe, dass das obere Rahmenelement 2 und der Schieber 8 die Funktion der beiden Joche übernehmen, dem hinlänglich bekannten Stand der Technik entspricht, wird auf letzteren verwiesen; einer weitergehenden Erläuterung bedarf es nicht.

Das Bewegen (Pfeil B) des Schiebers 8 längs der Arbeitsachse A beim Pressen erfolgt durch Beaufschlagung des bereits weiter oben erwähnten hydraulischen Arbeitsraums 10. Insoweit stellen der Zylinder 7 und der Kolben 9 in ihrem Zusammenwirken ein Antriebselement 26 dar. Für eine Eil-Schließbewegung des Schiebers 8 sowie das Öffnen der Radialpresse ist eine zusätzliche ZylinderKolben-Gruppe 27 vorgesehen in Form der mit der Kolbenstange 11 verbundenen Kolbenscheibe 28, welche dichtend in einem Zylinderrohr 29 geführt ist. Dieses ist seinerseits an die untere Abschlussfläche des unteren Rahmenelements 3 angesetzt und dort mittels der Druckplatte 30, welche mit Schrauben 31 gegen das untere Rahmenelement 3 gespannt ist und einen Zylinderboden bildet, fixiert. Auf diese Weise werden ein Öffnen-Arbeitsraum 32 sowie ein Eilschließen-Arbeitsraum 33 definiert, wobei der Öffnen-Arbeitsraum 32 über den in dem unteren Rahmenelement 3 verlaufenden Öffnen-Anschluss 34 und der Eilschließen-Arbeitsraum 33 über den in der Druckplatte 30 verlaufenden Eilschließen-Anschluss 35 beaufschlagbar sind.

Erkennbar ist in den Figuren 1 bis 3 weiterhin der Arbeitstisch 36 in Form einer mit dem Schieber 8 verbundenen, nämlich auf der oberen Stirnfläche des Kolbens 9 fixierten Platte 37.

## Patentansprüche

1. Radialpresse mit einer offenen, mindestens zwei Rahmenelemente (2, 3) aufweisenden Grundstruktur (1), einer Mehrzahl von um eine Pressachse (X) herum angeordneten Pressbacken (24) und einer auf diese wirkenden, sich an der Grundstruktur (1) abstützenden Antriebseinheit, mittels derer die Pressbacken (24) radial auf die Pressachse (X) zu bzw. von dieser weg bewegbar sind, wobei die Radialpresse nach Art einer Jochpresse ausgeführt ist mit zwei in einer zur Pressachse (X) senkrecht stehenden Bewegungsrichtung linear relativ zueinander bewegbaren Jochen oder Steuerkörpern (42, 46), wobei die Antriebseinrichtung mindestens ein als Linearantrieb ausgeführtes, eine Arbeitsachse (A) definierendes Antriebselement (26) aufweist, das sich an einem der Rahmenelemente (2, 3) abstützt, und die Pressbacken (24) in einem zwischen den beiden Jochen bzw. Steuerkörpern (42, 46) ausgebildeten Werkzeugeinbauraum (23) aufgenommen sind,
**dadurch gekennzeichnet,**
**dass** radial außerhalb der Pressbacken (24) mindestens eine diese umgebende, sich in einer im Wesentlichen auf der Pressachse (X) senkrecht stehenden Ebene in ringförmig geschlossener Form um die Pressachse herum erstreckende, einen Teil der Grundstruktur (1) bildende Faserstruktur (20) vorgesehen ist, welche die mindestens zwei Rahmenelemente (2, 3) mindestens eine zwischen diesen bestehende Trennfuge (4) überbrückend miteinander verbindet.

2. Radialpresse nach Anspruch 1, **dadurch gekennzeichnet, dass** mehrere in Richtung der Pressachse (X) zueinander versetzt angeordnete Faserstrukturen (20) vorgesehen sind.

3. Radialpresse nach Anspruch 1 oder Anspruch 2, **dadurch gekennzeichnet, dass** es sich bei den beiden Rahmenelementen (2, 3) um voneinander getrennte Bauteile handelt und zwischen der mindestens einen Faserstruktur (20) und den mindestens zwei Rahmenelementen (2, 3) Schlupf besteht.

4. Radialpresse nach einem der Ansprüche 1 bis 3, **dadurch gekennzeichnet, dass** die mindestens zwei Rahmenelemente (2, 3) über Führungselemente (15) quer zur Arbeitsachse (A) relativ zueinander lagegesichert sind.

5. Radialpresse nach einem der Ansprüche 1 bis 4, **dadurch gekennzeichnet, dass** in das untere Rahmenelement (3) ein nach oben offener, einen schüsselförmigen Zylinderboden (5) und einen Zylindermantel (6) umfassender Zylinder (7) integriert ist, in welchem ein an einem Schieber (8) angeformter Kolben (9) längs der vertikal orientierten Arbeitsachse (A) verschiebbar dichtend geführt ist.

6. Radialpresse nach Anspruch 5, **dadurch gekennzeichnet, dass** der Werkzeugeinbauraum (23) zwischen dem Schieber (8) und dem oberen Rahmenelement (2) ausgebildet ist, wobei die Führungselemente (15) als Führungsrohre (16) ausgeführt sind und der Schieber (8) auf den Führungsrohren (16) geführt ist.

## Claims

1. A radial press, having an open base structure (1) comprising at least two frame elements (2, 3), a plurality of press jaws (24) arranged about a press axis (X) and a drive unit acting on these and supporting itself on the base structure (1), by means of which the press jaws (24) are radially moveable towards the press axis (X) or away from the same, wherein the radial press is embodied in the manner of a yoke press, having two yokes or control bodies (42, 46) standing in a movement direction perpendicularly to the press axis (X) that can be linearly moved relative to one another, wherein the drive device comprises at least one drive element (26) embodied as linear drive defining a work axis (A), which supports itself on one of the frame elements (2, 3), and the press jaws (24) are received in a tool installation space (23) formed between the two yokes or control bodies (42, 46),
**characterised,**
**in that** radially outside the press jaws (24) at least one fibre structure (20) forming a part of the base structure (1) which extends in a plane standing substantially perpendicularly on the press axis (X) and extending in an annularly closed form round about the press axis is provided which, bridging at least one separating joint (4) existing between the at least two frame elements (2, 3), interconnects these.

2. The radial press according to Claim 1,
**characterised,**
**in that** multiple fibre structures (20) arranged offset relative to one another in the direction of the press axis (X) are provided.

3. The radial press according to Claim 1 or Claim 2,
**characterised,**
**in that** the two frame elements (2, 3) are components that are separate from one another and in that there is slip between the at least one fibre structure (20) and the at least two frame elements (2, 3).

4. The radial press according to any one of the Claims 1 to 3,
**characterised,**
**in that** the at least two frame elements (2, 3) are secured in position relative to one another via guide elements (15) transversely to the work axis (A).

5. The radial press according to any one of the Claims 1 to 4,
**characterised,**
**in that** in the lower frame element (3) a cylinder (7) that is open towards the top and includes a dished cylinder base (5) and a cylinder shell (6) is integrated, in which a piston (9) moulded onto a slide (8) is displaceably guided in a sealing manner along the vertically oriented work axis (A).

6. The radial press according to Claim 5,
**characterised,**
**in that** the tool installation space (23) is formed between the slide (8) and the upper frame element (2), wherein the guide elements (15) are embodied as guide tubes (16) and the slide (8) is guided on the guide tubes (16).

## Revendications

1. Presse radiale, avec une structure de base (1) comportant au moins deux éléments de cadre (2, 3), une pluralité de mâchoires de pressage (24) disposées autour d'un axe de pressage (X) et une unité d'entraînement agissant sur celles-ci, s'appuyant sur la structure de base (1), au moyen de laquelle les mâchoires de pressage (24) peuvent être déplacées radialement sur l'axe de pressage (X) vers ou s'éloignant de celui-ci, sachant que la presse radiale est exécutée à la manière d'une presse à deux montants, avec deux montants ou corps de commande (42, 46) mobiles de façon linéaire l'un par rapport à l'autre dans une direction de mouvement se trouvant perpendiculaire à l'axe de pressage (X), sachant que le système d'entraînement comporte au moins un élément d'entraînement (26) définissant un axe de travail (A), exécuté sous la forme d'un entraînement linéaire, qui s'appuie sur l'un des éléments de cadre (2, 3) et les mâchoires de pressage (24) sont logées dans un espace de montage d'outil (23) constitué entre les deux montants ou corps de commande (42, 46),
**caractérisée en ce que**
radialement en dehors des mâchoires de pressage (24), est prévue au moins une structure fibreuse (20) entourant celles-ci, formant une partie de la structure de base (1) s'étendant autour de l'axe de pressage dans une forme fermée de type annulaire dans un plan se trouvant pour l'essentiel perpendiculaire sur l'axe de pressage (X), laquelle relie entre eux au moins les deux éléments de cadre (2, 3), au moins un joint de séparation (4) existant entre ceux-ci faisant jonction.

2. Presse radiale selon la revendication 1, **caractérisée en ce que** plusieurs structures fibreuses (20) disposées décalées l'une par rapport à l'autre en direction de l'axe de pressage (X) sont prévues.

3. Presse radiale selon la revendication 1 ou la revendication 2, **caractérisée en ce que** concernant les deux éléments de cadre (2, 3), il s'agit de composants séparés l'un de l'autre et il y a un glissement entre au moins une structure fibreuse (20) et au moins les deux éléments de cadre (2, 3).

4. Presse radiale selon l'une des revendications 1 à 3, **caractérisée en ce qu'**au moins les deux éléments de cadre (2, 3) sont maintenus en position l'un par rapport à l'autre par le biais des éléments de guidage (15) transversalement à l'axe de travail (A).

5. Presse radiale selon l'une quelconque des revendications 1 à 4, **caractérisée en ce qu'**un fond cylindrique (5) en forme de cuve, ouvert vers le haut et un cylindre (7) comprenant une enceinte cylindrique (6) sont intégrés dans l'élément de cadre inférieur (3) dans lequel un piston (9) conformé sur un coulisseau (8) est guidé déplaçable de manière étanche le long de l'axe de travail (A) orienté verticalement.

6. Presse radiale selon la revendication 5, **caractérisée en ce que** l'espace de montage d'outil (23) est constitué entre le coulisseau (8) et l'élément de cadre supérieur (2), sachant que les éléments de guidage (15) sont exécutés sous la forme de tubes de guidage (16) et le coulisseau (8) est guidé sur les tubes de guidage (16).
